# EUROPEAN PATENT SPECIFICATION

(11) **EP 3 100 244 B1**
(45) Date of publication and mention of the grant of the patent: **05.08.2020**
(21) Application number: 15742711.3
(22) Date of filing: 29.01.2015
(51) Int. Cl.: G08B 6/00, G06F 3/01

(54) **HAPTIC-TACTILE, MOTION OR MOVEMENT SIGNAL CONVERSION SYSTEM AND ASSEMBLY**
SYSTEM UND ANORDNUNG ZUR UMWANDLUNG HAPTISCH-TAKTILER, MOTIONS- ODER BEWEGUNGSSIGNALE
SYSTÈME ET ENSEMBLE DE CONVERSION DE SIGNAL DE MOUVEMENT HAPTIQUE-TACTILE

(30) Priority: 29.01.2014 US 201461932991 P
(43) Date of publication of application: 07.12.2016
(73) Proprietor: The Guitammer Company, Columbus, OH 43229 (US)
(72) Inventor: LUDEN, Mark, A., Westerville, OH 43082 (US)
(74) Representative: Altmann Stößel Dick Patentanwälte PartG mbB
(86) International application number: PCT/US2015/013558
(87) International publication number: WO 2015/116835

(56) References cited:
- US-A- 5 973 422
- US-A- 5 973 422
- US-A1- 2007 001 494
- US-A1- 2009 128 306
- US-A1- 2010 312 154
- US-A1- 2011 133 910
- US-A1- 2012 019 030
- US-A1- 2012 221 148
- US-A1- 2012 239 200
- US-A1- 2013 227 410
- US-A1- 2013 316 826
- US-B2- 7 911 328

## Description

### BACKGROUND

There are many entertainment and educational events that are of interest to viewers who are not in attendance at the events or, if in attendance at the event, desire an experience that effects more than their visual or auditory senses. Some of the more popular activities of public interest include sporting contests, such as football games and automobile racing, and technological events, such as the launching of a space vehicle. Video broadcast allows reproduction of moving visible images in synchronism or along with the audio that was also generated by events. Stimuli that have been omitted from remote video reproductions of events include the haptic-tactile, motion or movement stimuli that can be perceived by the humans.

Therefore, there exists a need for a realistic remote reproduction of an event for the enhancement of a remote user's experience by reproducing, at a remote location, a representation of haptic-tactile, motion or movements or vibrations generated by an event and applying them to the remote user so that he or she can perceive them.

In the prior art, US 2009/0128306 A1 teaches a method for reproducing and applying reproductions of haptic vibrations that occur at a live activity to a remote video and audio viewer. It is disclosed that an electromechanical transducer is mechanically connected to a solid, inanimate physical object, such as a chair, that is in physical contact with a remote viewer.

US 2012/019030 A1 refers to a vibro-kinetic seating kit for providing seating to a user at a seating location in a multi-seating environment comprising other seating locations and for rendering a vibro-kinetic effect to the user. Further, US 2012/221148 A1 discloses a method for rendering, to a user, a live event on a playback system, wherein audio, video and motion data are captured from the live event and reproduced at a remote location. Also US 2012/239200 A1 refers to a system for rendering a vibro-kinetic feedback representative of the vibro-kinetic properties of a remote object on a vibro-kinetic platform. US 2007/001494 A1 discloses a multimedia chair, whereas US 2013/316826 A1 teaches a home-driving-simulator kit.

### SUMMARY

In accordance with the invention, a haptic-tactile, motion or movement signal conversion system is provided. The system includes a capturing member configured to capture one or more effects of an event, a processor in communication with the capturing member and configured to provide a signal based on the one or more effects for transmission to a remote location, a receiver positioned at the remote location and configured to receive the signal, a signal conversion device in communication with the receiver and configured to convert the signal into a physical movement, and a transmission member positioned adjacent to the signal conversion device and configured to transmit the physical movement from the signal conversion device to a signal conversion device user. Therein, the signal conversion device and the transmission member at least partially physically support the signal conversion device user. Further, the transmission member is a separate physical object with respect to the signal conversion device.

In accordance with further aspects of the present disclosure, a haptic-tactile, motion or movement signal conversion assembly is provided. The assembly includes an outer casing, an actuator disposed in the outer casing and configured to receive a signal and produce a physical movement based on one or more effects of an event, a transmission member contact surface positioned at an outer surface of the outer casing and configured to transmit the physical haptic-tactile, motion or movement to a transmission member positioned adjacent to the transmission member contact surface, and a movement connector disposed between the actuator and the transmission member contact surface and configured to transmit the physical haptic-tactile, motion or movement from the actuator to the transmission member contact surface.

### BRIEF DESCRIPTION OF THE FIGURES

The embodiments described herein and other features, advantages, and disclosures contained herein, and the manner of attaining them, will be better understood from the following description in conjunction with the accompanying drawing figures, in which like reference numerals identify like elements, and wherein:
Figure 1 illustrates a haptic-tactile, motion or movement signal broadcasting method in accordance with aspects of the present disclosure;
Figure 2 illustrates a haptic-tactile, motion or movement signal broadcasting method in accordance with aspects of the present disclosure;
Figure 3 illustrates a haptic-tactile, motion or movement signal source selection method in accordance with aspects of the present disclosure;
Figure 4 is a perspective view of a haptic-tactile, motion or movement signal conversion assembly in accordance with aspects of the present disclosure;
Figure 5 is an exploded view of a haptic-tactile, motion or movement signal conversion assembly in accordance with aspects of the present disclosure;
Figure 6 is a cross-sectional view of a haptic-tactile, motion or movement signal conversion assembly in accordance with aspects of the present disclosure;
Figure 7 is a perspective view of a haptic-tactile, motion or movement signal conversion assembly in accordance with aspects of the present disclosure;
Figure 8 illustrates a haptic-tactile, motion or movement signal conversion system in accordance with aspects of the present disclosure; and
Figure 9 illustrates transmission members in a haptic-tactile, motion or movement signal conversion system in accordance with aspects of the present disclosure.

### DETAILED DESCRIPTION

In the following detailed description of embodiments of the present disclosure, reference is made to the accompanying drawings that form a part hereof, and in which is shown by way of illustration, and not by way of limitation, such specific embodiments.

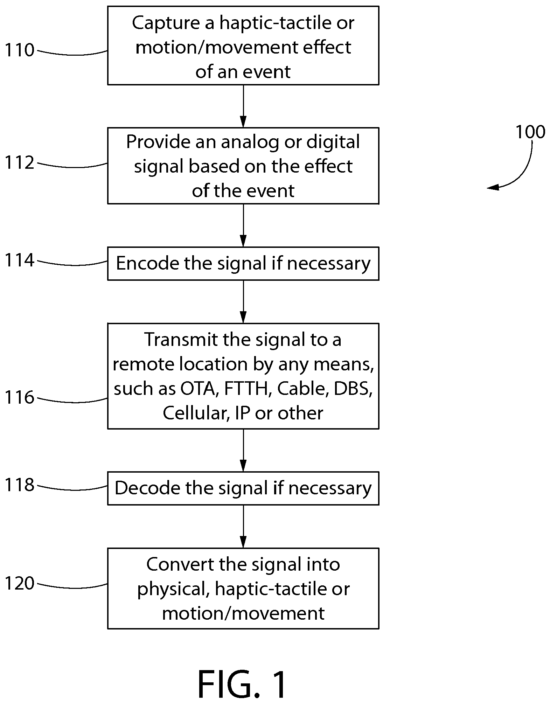

Referring now to FIG. 1, a haptic-tactile, motion or movement signal broadcasting method 100 is disclosed. The method 100 includes capturing, at step 110, a haptic-tactile, motion or movement effect of an event. The event may include movements or other characteristics with animate or inanimate objects. As non-limiting examples, events described in the present disclosure include sporting events, racing events, or any other public or private event featuring effects that may be captured. The method 100 further includes providing, at step 112, a signal, signals, or other data based on the effect of the event. The term "signal" as described herein refers to any data captured, processed, transmitted, received, or converted, including analog or digital signals, data, and information of any number, size, or type. Additionally, the signal, as described herein, may also include video or audio data captured, processed, transmitted, received, and/or converted from the remote location to the user. In one or more embodiments of the present disclosure, a video and/or audio signal is transmitted and received with the haptic-tactile signal. In one or more embodiments, the haptic-tactile, motion or movement signal is distinct from any audio or video signal, while in one or more embodiments, the haptic-tactile, motion or movement signal is transmitted along with or mixed with an audio and/or video signal.

The method 100 of one aspect further includes encoding, at step 114, the signal. Encoding of the signal is not necessary in one or more embodiments of the present disclosure. The method 100 further includes transmitting, at step 116, the signal to a remote location. In one embodiment, a receiver receives the signal. The signal may be transmitted via wired or wireless transmission means, including over-the-air broadcast or through satellite, fiber optic, cable, internet protocol, or cellular transmission infrastructure. The receiver may include any device capable of receiving a signal, including such non-limiting examples as a television, PC, tablet, or cellular or satellite telephone. The method 100 of one embodiment further includes decoding, at step 118, the signal. The method 100 further includes converting, at step 120, the signal into physical movement. The physical movement one or more embodiments includes any one or more haptic-tactile, motion or movement, sound, and/or visual effects based on the captured effects of the event. As one non-limiting example, sound and visual effects based on the event may be transmitted to the remote location with motion or movement, vibratory, or other haptic-tactile effects based on the event or a separate event or effects source. The haptic-tactile, motion or movement effects of an embodiment are generally similar to the effects captured at the originating event in terms of, for example, movement or vibratory frequency, amplitude, range, direction, and/or duration.

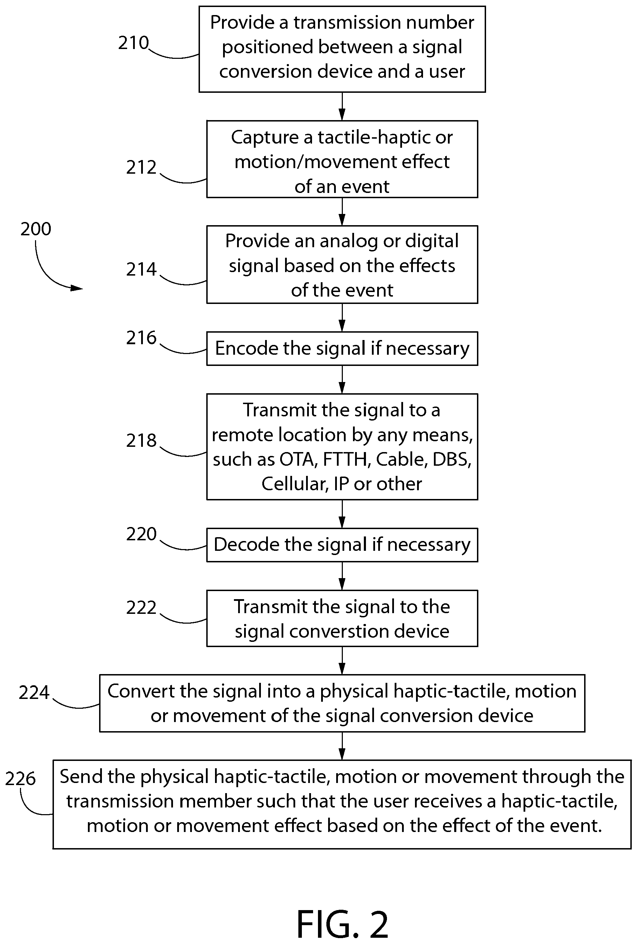

Referring now to FIG. 2, a haptic-tactile, motion or movement signal broadcasting method 200 is disclosed. The method 200 includes providing, at step 210, a transmission member positioned between a signal conversion device and a user. The method 200 further includes capturing, at step 212, an effect of an event. The method 200 further includes providing, at step 214, a signal based on the effect of the event. The signal may be analog or digital. The method 200 of an embodiment further includes encoding the signal at step 216. The method 200 may not include encoding of the signal. The method 200 further includes transmitting, at step 218, the signal to a remote location. The transmission of the signal may be by any means such as over-the-air, FTTH, cable, DBS, cellular, IP, etc. The method 200 further includes decoding the signal at step 220. The method 200 further includes transmitting, at step 222, the signal to the signal conversion device. The method 200 further includes converting, at step 224, the signal into physical haptic-tactile, motion or movement of the signal conversion device. The method 200 further includes sending, at step 226, the physical haptic-tactile, motion or movement through the transmission member such that the user receives a haptic-tactile, motion or movement effect based on the effect of the event.

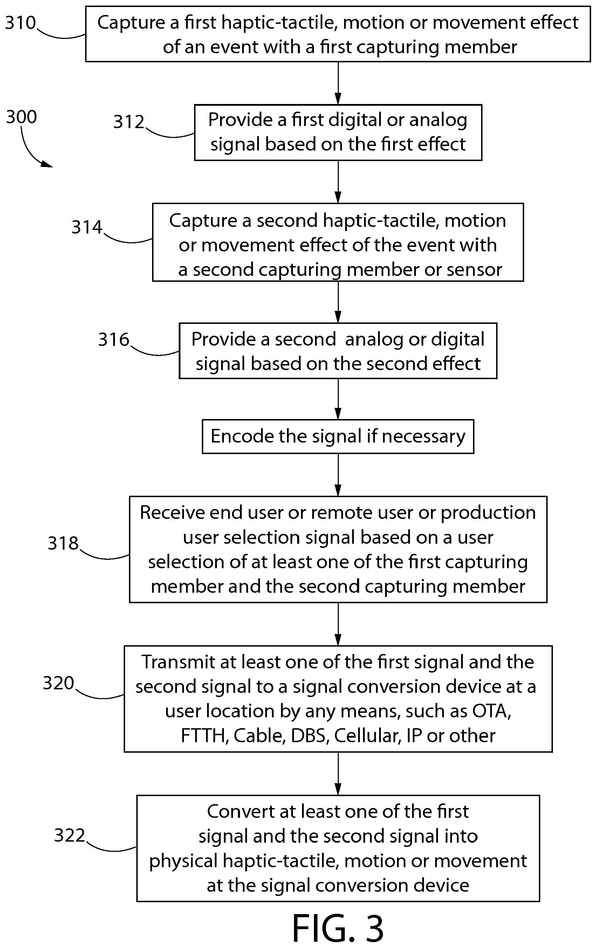

Referring now to FIG. 3, a haptic-tactile, motion or movement signal source selection method 300 is disclosed. The method 300 includes capturing, at step 310, a first effect of an event with a first capturing member. The method 300 further includes providing, at step 312, a first signal based on the first effect. The method 300 further includes capturing, at step 314, a second effect of the event with a second capturing member. The method 300 further includes providing, at step 316, a second signal based on the second effect. Any signals may be digital or analog. The signals may or may not be encoded. If encoded, the signals will be decoded at the user location. The method 300 further includes receiving, at step 318, a user selection signal based on a user selection of at least one of the first capturing member and the second capturing member. The method 300 further includes transmitting, at step 320, at least one of the first signal and the second signal to a signal conversion device at a user location. The method 300 further includes converting, at step 322, the at least one of the first signal and the second signal into physical haptic-tactile, motion or movement at the signal conversion device.

The signal source selection method 300 allows a party distributing, owning, and/or licensing the rights or a business handling broadcasting, transporting, and/or transmitting haptic-tactile, motion or movement signals to allow the selection for use and to monetize the signals separately, i.e. originating or captured from one unique animate or inanimate physical object or combination of such signals. Selection for use and payment for one or more haptic-tactile, motion or movement signals may be made by any conversion device user, not limited to users of haptic-tactile, motion or movement signal conversion devices, assemblies, or systems disclosed herein, for an individual event or program or through selection by the user of signal source or sources, such as selection of individual capturing members associated with animate or inanimate objects. The method 300 of one embodiment allows payment to be sent by the user and received by a second party based on a particular duration of time or through an ongoing subscription agreement.

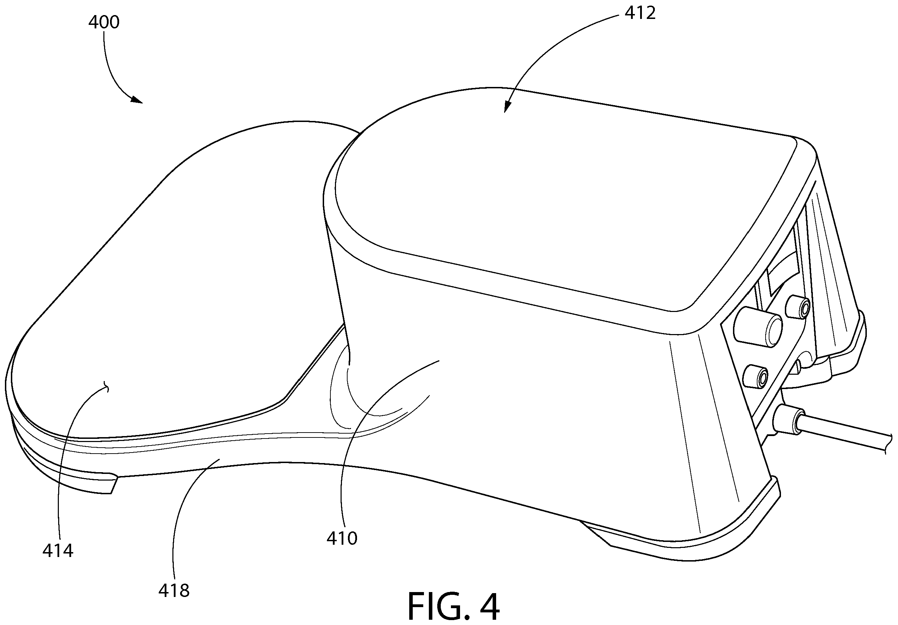

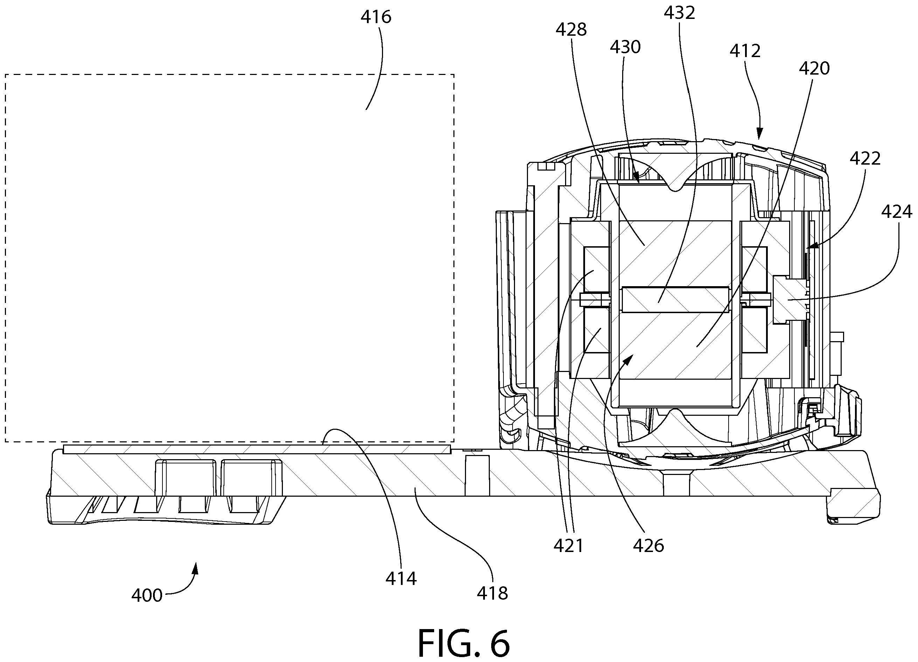

Referring now to FIG. 4, a haptic-tactile signal conversion assembly 400 is disclosed. The aspect of the conversion assembly 400 shown in FIG. 4 is configured for positioning under or in a separate physical object, including such non-limiting examples as furniture, floors, seating areas, or standing platforms, such that a conversion assembly user or users receives haptic-tactile, motion or movement effects based on the effects of an event that occurs at a remote location. The conversion assembly 400 of an embodiment includes an outer casing 410. An actuator 412 is disposed in the outer casing 410 and receives a signal. The actuator 412 of one or more embodiments includes a vibration transducer as described in U.S. Patent 5,973,422. The actuator 412 of one or more embodiments also includes a vibration transducer as described in U.S. Patent US2013106205. The actuator 412 of one aspect of the disclosure includes a magnetically suspended piston that moves or vibrates in response to one or more amplified signals, as described in further detail below. The actuator 412 produces a physical movement or vibration that replicates or is based on one or more effects of an event captured and sent as one or more signals. A transmission member contact surface 414 is positioned at an outer surface of the outer casing 410. The transmission member contact surface 414 transmits the physical movement to a transmission member 416, shown in FIG. 6, positioned adjacent to the transmission member contact surface 414. The physical movement of one embodiment includes multiple axis movement. As non-limiting examples, the actuator 412 may move in one or more of the x, y, and z axes, as well as rotation about those axes, or multiple actuators 412 may move independently in the x, y, and z axes, as well as rotation about those axes. In one or more embodiments, the actuator 412 produces haptic-tactile, motion or movement effects from a low frequency audio signal or signals from source content, such non-limiting examples including music, movies, video games, and content programming from prerecorded, post-produced, or live events regardless of the delivery method of the content media, either hard copy or streaming.

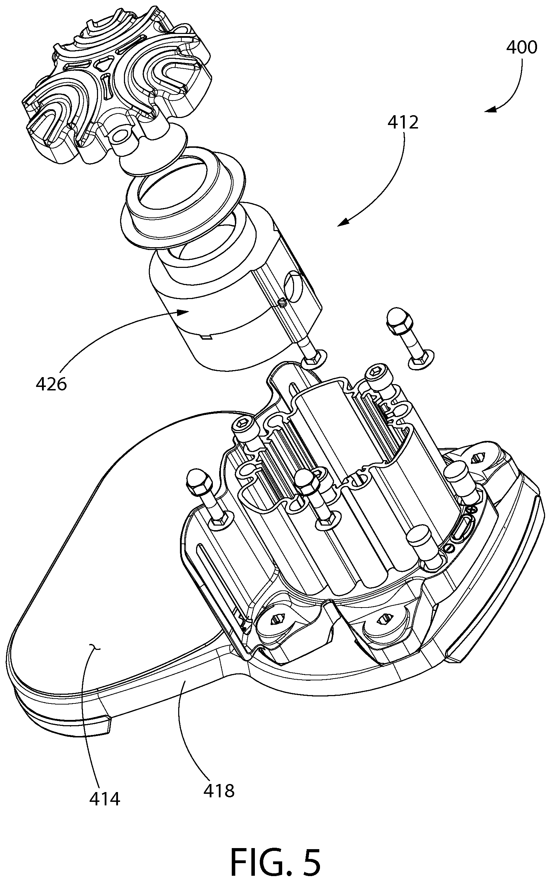

The conversion assembly 400 includes a movement connector 418 disposed between the actuator 412 and the transmission member contact surface 414. The movement connector 418 of the embodiment shown in FIG. 5 is a platform configured to at least partially support the transmission member 416 or a signal conversion assembly user positioned above the movement connector 418. The movement connector 418 transmits the physical movement from the actuator 412 to the transmission member contact surface 414.

Referring now to FIGS. 5 and 6, an exploded view of the haptic-tactile signal conversion assembly 400 and a cross-sectional view of the haptic-tactile signal conversion assembly 400 are shown. In an embodiment, the assembly 400 includes a receiver to receive one or more signals, as described in further detail below. The receiver of one embodiment is incorporated in the outer casing 410. The receiver of an embodiment is positioned outside of the outer casing 410 and in communication with the assembly 400. As described in the present disclosure, the receiver may receive wireless or wired signals and may communicate with the assembly 400 through wireless or wired transmission. The actuator 412 of an embodiment is a vibration transducer configured to receive a haptic-tactile, motion or movement signal and produce a corresponding haptic-tactile, motion or movement based on the effects of the event. In one or more embodiments, the actuator 412 produces single or multiple axis movement through moving mass, magnetic members, or other type of actuation mechanism. The actuator 412 of an embodiment includes a permanent magnet 420 and two electromagnet coils 421 disposed between upper and lower pieces 424, 426. The actuator 412 of one embodiment includes a stator member 422 which has a cylindrical, central chamber 430. The chamber 430 of the stator member 422 extends along a central axis in opposite directions from a magnetic center 424 of the stator member 422.

The pair of spaced coils 421 are mounted in the stator member 422 and are wound or connected in a direction to generate axial magnetic fields from those electrical signals in opposite axial directions.

Two opposite ends 428 and 420 of a reciprocating piston member 426 extend radially outwardly from the central axis. In an aspect of the disclosure, the reciprocating piston member 426 is formed from a circular, axially polarized, permanent magnet 432 sandwiched between and bonded to a pair of ferromagnetic cylinders, such as steel cylinders mounted on axially opposite ends of the permanent magnet 432. In this way, a complete magnetic circuit loop is created.

The conversion assembly 400 of one or more aspects of the disclosure includes an internal or external power source (not shown). The power source may include alternating or direct current electricity, disposable or rechargeable batteries, and an amplifier or transformer.

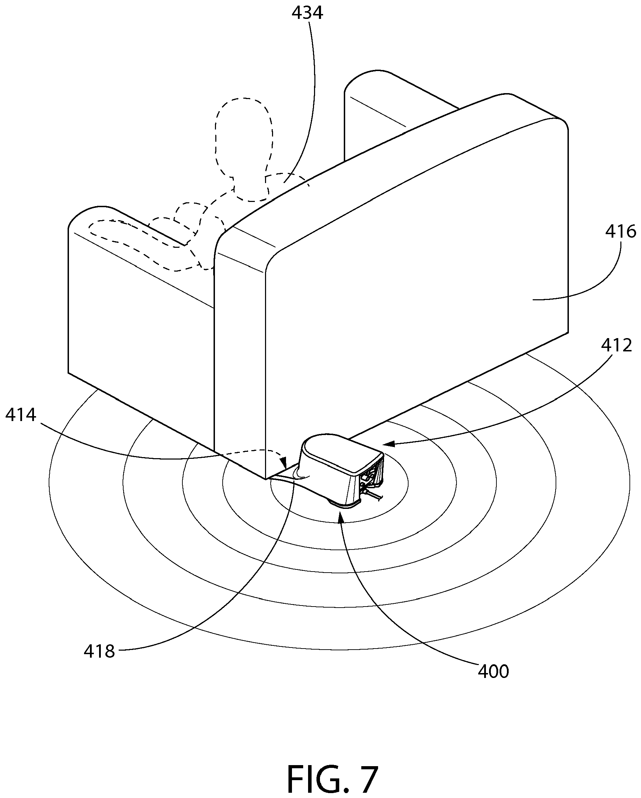

Referring now to FIG. 7, one aspect of the haptic-tactile, motion or movement signal conversion assembly 400 is shown. When the actuator 412 receives a signal, the actuator 412 produces the physical haptic-tactile, motion or movement based on the effects of the event captured. The transmission member contact surface 414 transmits the physical haptic-tactile, motion or movement to the transmission member 416 positioned adjacent to the transmission member contact surface 414. In the embodiment shown in FIG. 7, the transmission member 416 is a piece of furniture, such as a couch or chair supporting a conversion assembly user 434, positioned above the movement connector 418 on the transmission member contact surface 414. The movement connector 418 transmits the physical haptic-tactile, motion or movement from the actuator 412 of the conversion assembly 400 to the transmission member contact surface 414, the transmission member 416, and the user 434.

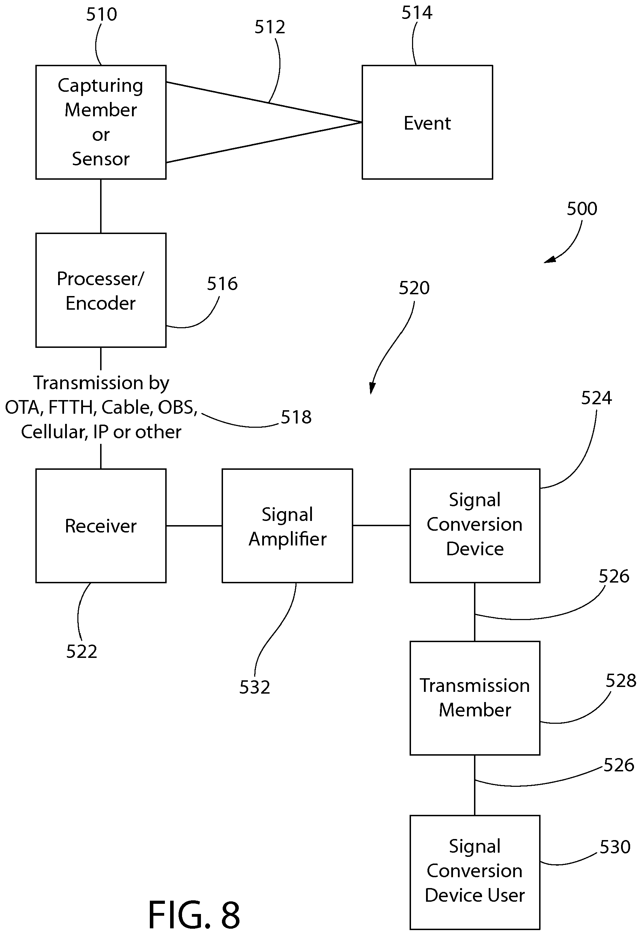

Referring now to FIG. 8, a haptic-tactile, motion or movement signal conversion system 500 is illustrated. The system 500 includes a capturing member 510 configured to capture one or more effects 512 of an event 514. The capturing member 510 of an embodiment is a sensor configured to capture physical movement. The capturing member 510 of one embodiment is configured to capture multiple axis and rotation about those axes haptic-tactile, motion or movement. The capturing member 510 may include an accelerometer, an impact sensor, or other type of sensor or transducer. The capturing member 510 is in communication with a processor 516 or encoding system that is configured to provide an analog or digital signal 518 based on the effects 512 for transmission by any means such as wired or wireless transmission means, including over-the-air broadcast or through satellite, fiber optic, cable, internet protocol, or cellular transmission infrastructure to a remote location 520. A receiver 522, including a receiver system that may include processing and decoding, is positioned at the remote location 520 and is configured to receive the signal 518. The system 500 further includes a signal conversion device 524 in wired or wireless communication with the receiver 522. The signal conversion device 524 converts the signal into a physical haptic-tactile, motion or movement 526 and may include any aspect of the signal conversion assembly 400 described with reference to FIGS. 4-7 of the present disclosure. A transmission member 528 is positioned adjacent to the signal conversion device 524 to transmit, whether by wired or wireless means, the physical haptic-tactile, motion or movement 526 from the signal conversion device 524 to a signal conversion device user 530. The transmission member 528 of an embodiment abuts or otherwise physically touches the signal conversion device 524 such that the signal conversion device user 530 receives a haptic-tactile, motion or movement effect based on the effects 512 of the event 514. In one embodiment, the transmission member 528 is furniture. The signal conversion device 524 and the transmission member 528 at least partially physically support the signal conversion device user 530.

In an embodiment, the processer 516 encodes the signal 518 for transmission to the remote location 520. The receiver 522 of an embodiment decodes the signal 518 received from the processor 516. The receiver 522 may receive the signal 518 via wired or wireless transmission. An amplifier 532 is provided in an embodiment to communicate with the signal conversion device 524 and enhance the signal 518 received by the receiver 522.

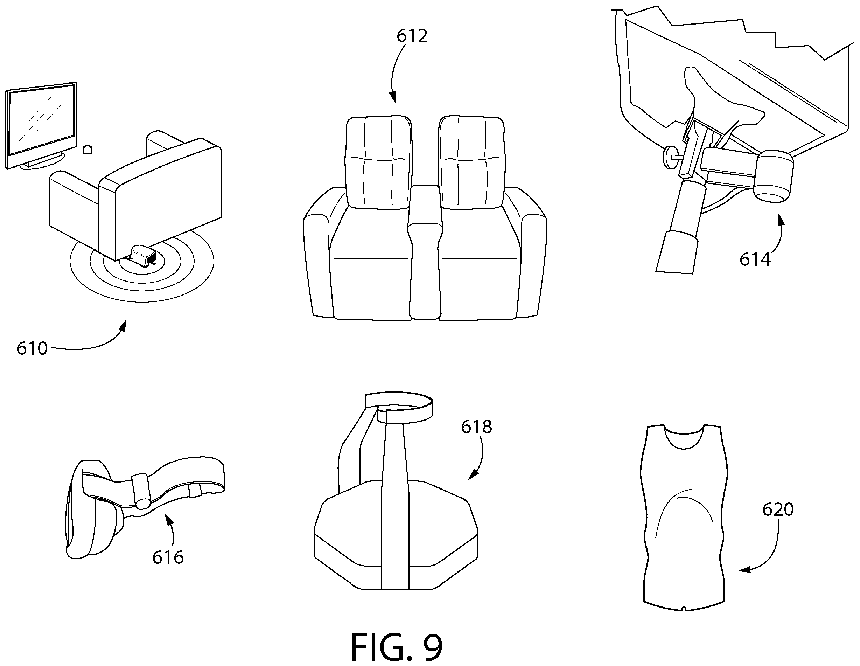

Referring now to FIG. 9, various transmission members 610-620 for use with one or more haptic-tactile, motion or movement signal conversion systems 500 are illustrated. When the signal conversion device 524 of any embodiment of the present disclosure receives a signal 518, an actuator (not shown) produces a physical haptic-tactile, motion or movement based on captured event effects to ultimately transmit to one or more of the transmission members 610-620. Transmission members 610-620 of the present invention include, as non-limiting examples, a couch transmission member 610, a chair transmission member 612, and a seat post transmission member 614. Further, a head gear transmission member 616, a virtual reality or augmented reality transmission member 618, and a wearable transmission member 620 are disclosed. Each of the transmission members 610-620 includes a movement connector (not shown) that transmits physical movement, such as a haptic-tactile, motion or movement, from the actuator (not shown) to a transmission member contact surface (not shown) and, ultimately to the transmission member 610-620 and thereby the remote end user.

The scope of the invention is defined by the appended claims.

## Claims

1. A haptic-tactile, motion or movement signal conversion system (500) comprising:
a capturing member (510) configured to capture one or more effects of an event;
a processor (516) in communication with the capturing member (510) and configured to provide a signal based on the one or more effects for transmission to a remote location;
a receiver (522) positioned at the remote location and configured to receive the signal;
a signal conversion device (524) in communication with the receiver (522) and configured to convert the signal into a physical movement;
**characterised in** a transmission member (528) positioned adjacent to the signal conversion device (524) and configured to transmit the physical movement from the signal conversion device (524) to a signal conversion device user (530), wherein both the signal conversion device (524) and the transmission member (528) at least partially physically support the signal conversion device user (530) and the transmission member (528) is a separate physical object with respect to the signal conversion device (524) and wherein the transmission member abuts the signal conversion device such that the signal conversion device user receives a haptic-tactile, motion or movement effect based on the one or more effects of the event.

2. The conversion system (500) of claim 1, wherein the processor is further configured to encode the signal for transmission to the remote location.

3. The conversion system (500) of claim 2, wherein the receiver (522) is further configured to decode the signal received from the processor (516).

4. The conversion system (500) of claim 1, further comprising an amplifier (532) in communication with the signal conversion device (524) and configured to enhance the signal received by the receiver (522).

5. The conversion system (500) of claim 1, wherein the capturing member (510) is a sensor configured to capture physical movement.

6. The conversion system (500) of claim 5, wherein the sensor is further configured to capture multiple axis movement and rotation about the axes.

7. The conversion system (500) of claim 6, wherein the signal conversion device (524) is configured to convert the signal into multiple axis movement and rotation about the axes.

8. The conversion system (500) of claim 1, wherein the receiver (522) is configured to receive the signal via wireless transmission.

## Patentansprüche

1. System zur Umwandlung haptisch-taktiler Motions- oder Bewegungssignale (500), das Folgendes umfasst:
ein Erfassungselement (510), eingerichtet zum Erfassen von einem oder mehreren Effekten eines Ereignisses;
einen Prozessor (516) in Kommunikation mit dem Erfassungselement (510) und eingerichtet zum Bereitstellen eines Signals basierend auf dem einen oder den mehreren Effekten zur Übertragung an einen entfernten Ort;
einen Empfänger (522), positioniert am entfernten Ort und eingerichtet zum Empfangen des Signals;
Signalumwandlungsvorrichtung (524) in Kommunikation mit dem Empfänger (522) und eingerichtet zum Umwandeln des Signals in eine physische Bewegung;
**dadurch gekennzeichnet, dass**
ein Übertragungselement (528), angrenzend an die Signalumwandlungsvorrichtung (524) positioniert und eingerichtet zum Übertragen der physischen Bewegung von der Signalumwandlungsvorrichtung (524) zu einem Benutzer (530) der Signalumwandlungsvorrichtung, wobei sowohl die Signalumwandlungsvorrichtung (524) als auch das Übertragungselement (528) den Benutzer (530) der Signalumwandlungsvorrichtung zumindest teilweise physisch unterstützen und wobei das Übertragungselement (528) ein separates physisches Objekt bezüglich der Signalumwandlungsvorrichtung (524) ist und wobei das Übertragungselement an der Signalumwandlungsvorrichtung anliegt, sodass der Benutzer der Signalumwandlungsvorrichtung einen haptisch-taktilen Motions- oder Bewegungseffekt basierend auf dem einen oder den mehreren Effekten des Ereignisses empfängt.

2. Umwandlungssystem (500) nach Anspruch 1, wobei der Prozessor ferner eingerichtet ist zum Codieren des Signals zur Übertragung an den entfernten Ort.

3. Umwandlungssystem (500) nach Anspruch 2, wobei der Empfänger (522) ferner eingerichtet ist zum Decodieren des vom Prozessor (516) empfangenen Signals.

4. Umwandlungssystem (500) nach Anspruch 1, ferner umfassend einen Verstärker (532) in Kommunikation mit der Signalumwandlungsvorrichtung (524) und eingerichtet zum Verstärken des durch den Empfänger (522) empfangenen Signals.

5. Umwandlungssystem (500) nach Anspruch 1, wobei das Erfassungselement (510) ein Sensor ist, der eingerichtet ist zum Erfassen von physischer Bewegung.

6. Umwandlungssystem (500) nach Anspruch 5, wobei der Sensor ferner eingerichtet ist zum Erfassen von mehrachsiger Bewegung und von Rotation um die Achsen.

7. Umwandlungssystem (500) nach Anspruch 6, wobei die Signalumwandlungsvorrichtung (524) eingerichtet ist zum Umwandeln des Signals in mehrachsige Bewegung und Rotation um die Achsen.

8. Umwandlungssystem (500) nach Anspruch 1, wobei der Empfänger (522) ferner eingerichtet ist zum Empfangen des Signals über kabellose Übertragung.

## Revendications

1. Système (500) de conversion de signal haptique-tactile, de déplacement ou de mouvement comportant :
un organe (510) de capture configuré pour capturer un ou plusieurs effets d'un événement ;
un processeur (516) en communication avec l'organe (510) de capture et configuré pour fournir un signal basé sur l'effet ou les effets en vue d'une transmission à un lieu distant ;
un récepteur (522) positionné sur le lieu distant et configuré pour recevoir le signal ;
un dispositif (524) de conversion de signal en communication avec le récepteur (522) et configuré pour convertir le signal en un mouvement physique ;
**caractérisé par** un organe (528) de transmission positionné au voisinage du dispositif (524) de conversion de signal et configuré pour transmettre le mouvement physique du dispositif (524) de conversion de signal à un utilisateur (530) de dispositif de conversion de signal, le dispositif (524) de conversion de signal et l'organe (528) de transmission soutenant tous deux physiquement au moins partiellement l'utilisateur (530) de dispositif de conversion de signal et l'organe (528) de transmission étant un objet physique distinct par rapport au dispositif (524) de conversion de signal et l'organe de transmission prenant appui sur le dispositif de conversion de signal de telle façon que l'utilisateur de dispositif de conversion de signal reçoive un effet haptique-tactile, de déplacement ou de mouvement basé sur l'effet ou les effets de l'événement.

2. Système (500) de conversion selon la revendication 1, le processeur étant en outre configuré pour coder le signal en vue de sa transmission au lieu distant.

3. Système (500) de conversion selon la revendication 2, le récepteur (522) étant en outre configuré pour décoder le signal reçu en provenance du processeur (516).

4. Système (500) de conversion selon la revendication 1, comportant en outre un amplificateur (532) en communication avec le dispositif (524) de conversion de signal et configuré pour renforcer le signal reçu par le récepteur (522).

5. Système (500) de conversion selon la revendication 1, l'organe (510) de capture étant un capteur configuré pour capturer un mouvement physique.

6. Système (500) de conversion selon la revendication 5, le capteur étant en outre configuré pour capturer un mouvement sur des axes multiples et une rotation autour des axes.

7. Système (500) de conversion selon la revendication 6, le dispositif (524) de conversion de signal étant configuré pour convertir le signal en un mouvement sur des axes multiples et une rotation autour des axes.

8. Système (500) de conversion selon la revendication 1, le récepteur (522) étant configuré pour recevoir le signal via une transmission sans fil.
